# FASCICULE DE BREVET EUROPEEN

(11) **EP 0 373 022 B1**
(45) Date de publication et mention de la délivrance du brevet: **02.03.1994**
(21) Numéro de dépôt: 89403190.5
(22) Date de dépôt: 20.11.1989
(51) Int. Cl.: B25B 23/10

(54) **Adaptateur pour le vissage ou le dévissage d'éléments de liaison filetés**
Adapter zum Fest- oder Losschranken von mit Gewinde versehenen Verbindungsmitteln
Adapter for screwing or unscrewing threaded connection elements

(30) Priorité: 09.12.1988 FR 8816263
(43) Date de publication de la demande: 13.06.1990
(73) Titulaire: FRAMATOME, 92400 Courbevoie (FR)
(72) Inventeur: Frizot, Alain, F-77710 Montcenis (FR)
(74) Mandataire: Lanceplaine, Jean-Claude

(56) Documents cités:
- CH-A- 628 563
- FR-A- 1 272 351
- GB-A- 125 298
- GB-A- 143 984
- US-A- 1 549 041
- US-A- 4 618 299
- US-A- 4 648 293

## Description

La présente invention a pour objet un adaptateur pour le vissage ou le dévissage d'un élément de liaison fileté, interposé entre les extrémités en vis-à-vis d'un organe de vissage ou de dévissage automatique et l'élément de liaison fileté.

Généralement, pour visser ou dévisser des éléments de liaison filetés et plus particulièrement des éléments de liaison de grandes dimensions constitués par exemple par des goujons, on utilise des moyens automatiques, tels que des robots de vissage et de dévissage.

L'opération de dévissage s'effectue le plus souvent en fixant la tige d'un vérin extenseur sur la partie libre de l'élément de liaison, puis en exerçant, par l'intermédiaire du vérin, une tension sur l'élément de liaison de manière à provoquer une élongation dudit élément, ce qui consécutivement entraîne l'écrou de serrage de façon à l'éloigner de la face d'appui. Ensuite, l'élément de liaison est entraîné en rotation, dans le sens inverse de l'hélice, par un robot de vissage et de dévissage.

La première étape du dévissage, qui consiste à débloquer l'élément de liaison, est bien souvent la plus délicate et c'est précisément au début de cette étape que certaines difficultés apparaissent.

Ces difficultés peuvent provenir d'une part d'un colmatage des filets, d'autre part d'un point dur mécanique.

Dans le premier cas, on s'aperçoit qu'il est nécessaire, pour agir avec efficacité, d'exercer un couple de dévissage d'une valeur plus élevée que celle initialement prévue.

Cet état de fait induit, au niveau de la connexion reliant le vérin extenseur à l'élément de liaison, des forces supplémentaires, donc parasites, ayant pour influence de favoriser le patinage soit intermittent, ou soit permanent de ladite connexion.

Dans le deuxième cas, la situation est particulièrement délicate. L'origine du point dur mécanique peut être due, soit à la présence d'un corps dur isolé logé entre les filets, soit au fluage provoqué par un effort de serrage excessif ou bien, un effort en cours d'exploitation.

Quel que soit le type d'anomalie à éliminer les moyens utilisés jusqu'à présent ne permettent pas de résoudre efficacement le problème et demandent généralement un temps d'intervention assez long, ce qui est préjudiciable à la sécurité des personnes chargées de ces interventions, car elles peuvent être réalisées dans une zone souvent rendue dangereuse par le fait qu'elle est soumise à des fortes irradiations ou à une pollution chimique.

On connaît dans le brevet GB-A-143984 un adaptateur pour le vissage ou le dévissage d'éléments de liaison filetés qui comprend un écrou vissé sur l'extrémité de l'élément de liaison et coopérant avec un embout biconnexion adapté pour assurer la liaison entre un organe de vissage ou de dévissage et ledit élément de liaison, des moyens autobloquants en rotation entre ledit écrou et ledit embout et des moyens d'appui de l'embout sur l'extrémité de l'élément de liaison.

Le but de l'invention est donc de proposer un adaptateur pour le vissage ou le dévissage d'éléments de liaison filetés évitant les inconvénients précités et permettant, de part sa conception, un temps d'intervention très court pour sa mise en place, tout en offrant la possibilité d'intervenir en permanence, de façon à modifier avec précision, l'efficacité du serrage afin de renforcer ou de relâcher la tension sur l'élément de liaison fileté.

L'invention a pour objet un adaptateur pour le vissage ou le dévissage d'éléments de liaison filetés, comprenant un écrou vissé sur l'extrémité de l'élément de liaison, où ledit écrou coopère avec un embout biconnexion adapté pour assurer la liaison entre un organe de vissage ou de dévissage et ledit élément de liaison en formant une liaison à engagement positif avec une partie non-filetée de l'élément de liaison, des moyens autobloquants en rotation entre ledit écrou et ledit embout et des moyens d'appui élastique de l'embout sur l'extrémité de l'élément de liaison.

Selon d'autres caractéristiques de l'invention :
- l'écrou est percé axialement de part en part d'un orifice comportant en partie basse, un filetage interne destiné à se visser sur l'extrémité filetée de l'élément de liaison, en partie médiane, une butée de section annulaire perpendiculaire à l'axe dudit orifice et, en partie haute, un carter de protection muni d'une découpe centrale,
- l'embout biconnexion comporte successivement, de bas en haut, un alésage interne adapté à l'extrémité de l'élément de liaison, une butée annulaire extérieure, une couronne dentée extérieure, et des moyens de connexion avec l'organe de vissage ou de dévissage,
- les moyens autobloquants sont constitués par au moins un cliquet implanté radialement dans l'épaisseur de la paroi de l'écrou et coopérant avec la couronne dentée de l'embout,
- l'extrémité du cliquet a la forme d'une dent dont le profil correspond aux dents de la couronne,
- les moyens d'appui élastique de l'embout sur l'extrémité de l'élément de liaison sont constitués par une cartouche à ressort.

L'invention sera mieux comprise à l'aide de la description qui va suivre, donnée uniquement à titre d'exemple et faite en se référant aux dessins annexés, sur lesquels :
- La figure 1 est une vue en coupe longitudinale de l'adaptateur selon l'invention,
- la figure 2 est une vue en coupe selon la ligne 2-2 de la figure 1,
- la figure 3 est une vue à plus grande échelle du cliquet équipant l'adaptateur selon l'invention.

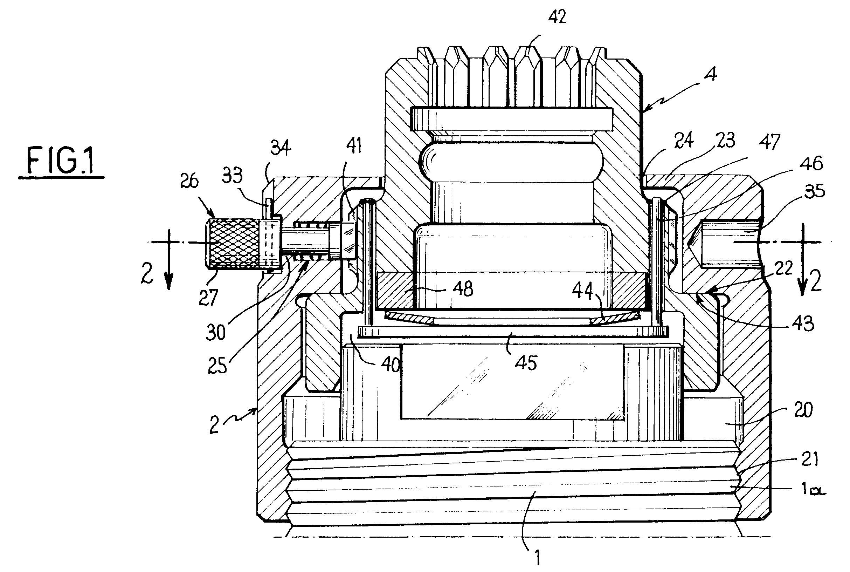

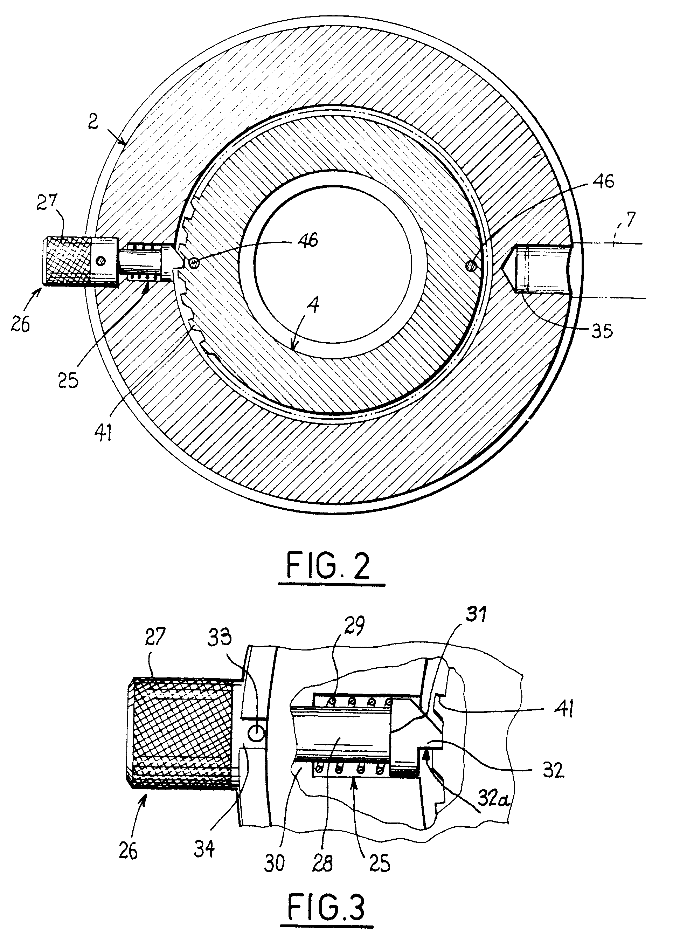

Le dispositif conforme à l'invention, tel qu'il est représenté aux figures 1 et 2, est utilisé pour assurer la connexion entre un organe de vissage ou de dévissage automatique, non représenté, et un élément de liaison fileté plus particulièrement un élément de grande dimension constitué par exemple par un goujon 1.

L'adaptateur se compose d'un écrou 2 réalisé dans la masse, offrant ainsi une grande résistance.

Cet écrou est percé axialement de part en part d'un orifice 20 composé d'une succession de profils différents assurant des fonctions particulières.

Ainsi, l'orifice 20 comporte, en partie basse, un filetage interne 21 destiné à se visser sur l'extrémité filetée 1a du goujon 1, en partie médiane, une butée 22 de section annulaire perpendiculaire à l'axe dudit orifice, et, en partie haute, un carter de protection 23 muni d'une découpe centrale 24.

D'autre part, l'écrou 2 comporte, dans sa partie haute, un alésage 25 perpendiculaire à l'axe de l'orifice 20 et dans lequel est implanté radialement un cliquet 26, représenté à plus grande échelle à la figure 3, Ce cliquet 26 comporte un bouton moleté 27 prolongé par un axe 28 logé dans l'alésage 25. Sur l'axe 28 est placé un ressort 29 dont une extrémité est en appui sur une butée fixe 30 formée par un épaulement de l'alésage 25 et dont l'autre extrémité est en appui sur une butée mobile 31 formée par la tête de l'axe 28.

L'extrémité de la tête 31 de l'axe 28 se présente sous la forme d'une dent 32 possédant une facette d'attaque 32a.

Le cliquet 26 est maintenu en position verticale par une goupille 33 logée dans une encoche 34 prévue à la périphérie de l'écrou 2.

Pratiquement au même niveau que l'alésage 25, l'écrou 2 comporte un ensemble de trous borgnes 35 symétriquement répartis permettant d'engager l'extrémité 7 d'un dispositif de manoeuvre, réglé conformément à un couple de serrage prédéterminé (figure 2).

L'adaptateur est également constitué d'un embout biconnexion 4 pourvu à sa base d'un logement femelle 40 compatible avec la forme de l'extrémité du goujon 1. Ce logement est par exemple constitué d'un alésage semi-circulaire comportant au moins deux faces planes parallèles.

La partie médiane de l'embout 4 est pourvue d'une denture périphérique 41 taillée dans la masse et destinée à recevoir la dent 32 du cliquet 26. La partie haute de cet embout comporte un usinage adéquat 42 assurant la liaison avec un adaptateur d'un organe de vissage ou de dévissage non représenté.

L'embout 4 comporte également une butée annulaire extérieure 43 destinée à recevoir la face annulaire de la butée 22 de l'écrou 2.

Enfin, l'embout 4 comporte à l'intérieur du logement des moyens d'appui élastique sur l'extrémité du goujon 1.

Ces moyens sont constitués par une cartouche à ressort 44 formée soit de rondelles coniques élastiques empilées selon un choix prédéterminé, soit d'un ressort de compression maintenu dans le logement 40 par une plaquette 45 suspendue par l'intermédiaire de deux tiges 46 retenues elles-mêmes par rapport à l'embout 4 à l'aide par exemple de clips ou de goupilles 47.

Une rondelle d'épaisseur réglable 48 peut être interposée entre la cartouche à ressort 44 et le fond du logement 40 en fonction du nombre de rondelles élastiques, donc de l'effort désiré. Ces moyens d'appui élastique ont pour objectif principal de préserver l'extrémité du goujon 1 des risques de matage.

La mise en place de l'adaptateur est entièrement exécutée manuellement et réalisée par exemple lors de l'opération de démontage du goujon 1.

Tout d'abord, on pose l'embout 4, muni de ses différents éléments tels que les moyens d'appui élastique, sur l'extrémité du goujon 1, et on le fait tourner autour de son axe de sorte que le logement 40 s'engage sur l'extrémité profilée du goujon 1.

Avant de monter l'écrou 2, on tire le cliquet 26 et on le verrouille en position arrière en faisant tourner le bouton moleté 27 pour amener la goupille 33 en position horizontale en appui à l'extérieur de l'encoche verticale 34.

Ensuite l'écrou 2 est engagé sur l'embout 4 et vient se reposer sur l'extrémité filetée 1a du goujon 1. Au moyen du dispositif de manoeuvre 7, l'écrou 2 est vissé jusqu'à ce que la face annulaire de la butée 22 vienne en appui sur la butée annulaire 43 de l'embout 4.

Le cliquet 26 est réglé en position active en tournant le bouton moleté 27 pour que la goupille 33 vienne se loger en position verticale dans encoche 34. Le ressort de rappel 29 agit axialement sur la tête 31 de l'axe 28 avec une force suffisante pour permettre l'engagement de la dent 32 avec la denture périphérique 41 de l'embout 4.

Le serrage est finalisé en tournant d'une fraction de tour l'écrou 2 au moyen du dispositif de manoeuvre 7. Dès l'amorce de cette rotation, le cliquet 26 saute dans une encoche de la denture périphérique 41 et remplit ainsi sa fonction anti-retour.

Le dispositif de manoeuvre 7 est retiré et à cet instant l'organe de vissage et dévissage peut être engagé sur l'extrémité de l'embout 4, et cet organe de vissage et dévissage peut entrer en fonction.

La première étape du dévissage qui consiste à débloquer le goujon 1 est la plus délicate.

Pour cela, l'organe de vissage et dévissage fait circuler, verticalement, des vibrations dont les fréquences sont élevées, et ne peuvent en aucune façon engendrer une force horizontale capable de faire sauter la dent 32 du cliquet 26 de la denture périphérique 41.

Par conséquent, les vibrations transitent directement de l'embout 4 au goujon 1 à travers leurs faces de contact et atteignent l'autre extrémité vissée du goujon 1.

Le dévissage ne peut se produire qu'au niveau de l'extrémité vissée du goujon et non pas de la liaison embout 4 - goujon 1 compte tenu des moyens autobloquants entre l'embout 4 et l'écrou 2 vissé sur le goujon 1.

L'adaptateur selon l'invention, permet donc de faire passer, sans interruption, des vibrations verticales sans risque de désserrage au niveau des filetages de l'accouplement et, de par sa conception, demande un temps d'intervention très court pour sa mise en place.

De plus, il offre la possibilité de pouvoir intervenir en permanence pour modifier, avec précision, l'efficacité du serrage de façon soit à renforcer, soit à relâcher la tension de la liaison.

Un tel adaptateur peut être utilisé pour monter bout à bout des arbres ou des gros tubes de façon rigide et permettant de passer à la fois un couple et un effort axial important.

Il peut également être utilisé en tant que butée radiale dans un empilage de pièces où se succèdent roulements à billes, rondelles élastiques ou non, avec la possibilité de rattrapage de l'usure.

## Revendications

1. Adaptateur pour le vissage ou le dévissage d'éléments de liaison filetés (1), comprenant un écrou (2) vissé sur l'extrémité de l'élément de liaison (1), où ledit écrou (2) coopère avec un embout biconnexion (4) adapté pour assurer la liaison entre un organe de vissage ou de dévissage et ledit élément de liaison (1) en formant une liaison à engagement positif avec une partie non-filetée de l'élément de liaison, des moyens (26, 41) autobloquants en rotation entre ledit écrou (2) et ledit embout (4) et des moyens (44) d'appui élastique de l'embout (4) sur l'extrémité de l'élément de liaison (1).

2. Adaptateur selon la revendication 1, caractérisé en ce que l'écrou (2) est percé axialement de part en part d'un orifice (20) comportant en partie basse, un filetage (21) interne destiné à se visser sur l'extrémité fileté de l'élément de liaison (1), en partie médiane, une butée de section annulaire (22) perpendiculaire à l'axe dudit orifice (20) et, en partie haute, un carter de protection (23) muni d'une découpe centrale (24).

3. Adaptateur selon la revendication 1, caractérisé en ce que l'embout biconnexion (4) comporte successivement, de bas en haut, un alésage interne (40) adapté à l'extrémité de l'élément de liaison (1), une butée annulaire extérieure (43), une couronne dentée extérieure (41), et des moyens de connexion (42) avec l' organe de vissage ou de dévissage.

4. Adaptateur selon l'une des revendications précédentes, caractérisé en ce que les moyens autobloquants sont constitués par au moins un cliquet (26) implanté radialement dans l'épaisseur de la paroi de l'écrou (2) et coopérant avec la couronne dentée (41) de l'embout (4).

5. Adaptateur selon la revendication 4, caractérisé en ce que l'extrémité du cliquet (26) a la forme d'une dent (3) dont le profil correspond aux dents de la couronne (41).

6. Adaptateur selon la revendication 1, caractérisé en ce que les moyens d'appui élastique de l'embout (4) sur l'extrémité de l'élément de liaison (1) sont constitués par une cartouche à ressort (44).

7. Adaptateur selon la revendication 6, caractérisé en ce que la cartouche à ressort (44) est constituée par un empilement de rondelles coniques maintenues par une plaquette (45) suspendues à l'intérieur de l'embout (4).

8. Adaptateur selon la revendication 6, caractérisé en ce que la cartouche à ressort (44) est constituée par un ressort de compression maintenu par une plaquette (45) suspendue à l'intérieur de l'embout (4).

## Claims

1. Adaptor for screwing or unscrewing threaded connection elements (1), comprising a nut (2) screwed onto the end of the connection element (1), where the said nut (2) interacts with a two-way connector (4) adapted to ensure the connection between a screwing or unscrewing member and the said connection element (1) forming a positive-engagement connection with a non-threaded part of the connection element, rotationally self-locking means (26, 41) between the said nut (2) and the said connector (4), and means (44) for the elastic support of the connector (4) on the end of the connection element (1).

2. Adaptor according to Claim 1, characterized in that the nut (2) is pierced axially right through with an orifice (20) having, in the bottom part, an internal screw thread (21) intended to be screwed onto the threaded end of the connection element (1), in the middle part, a stop, with an annular cross-section (22), perpendicular to the axis of the said orifice (20) and, in the top part, a guard casing (23) equipped with a central cut-out (24).

3. Adaptor according to Claim 1, characterized in that the two-way connector (4) has, successively from bottom to top, an internal bore (40) adapted to the end of the connection element (1), an outer annular stop (43), an outer toothed ring (41), and means for connection (42) to the screwing or unscrewing member.

4. Adaptor according to one of the preceding claims, characterized in that the self-locking means consist of at least one catch (26) set radially in the thickness of the wall of the nut (2) and interacting with the toothed ring (41) of the connector (4).

5. Adaptor according to Claim 4, characterized in that the end of the catch (26) has the form of a tooth (39), the profile of which corresponds to the teeth of the ring (41).

6. Adaptor according to Claim 1, characterized in that the means for the elastic support of the connector (4) on the end of the connection element (1) consist of a spring insert (44).

7. Adaptor according to Claim 6, characterized in that the spring insert (44) consists of a stack of conical washers held in place by a plate (45) suspended inside the connector (4).

8. Adaptor according to Claim 6, characterized in that the spring insert (44) consists of a compression spring held in place by a plate (45) suspended inside the connector (4).

## Patentansprüche

1. Adapter zum Ein- oder Ausschrauben von mit einem Gewinde versehenen Verbindungselementen (1), der aus einer Mutter (2), die auf das Ende des Verbindungselements (1) aufgeschraubt ist und mit einem Doppelanschluß-Aufsatz (4) zusammenwirkt, der die Verbindung zwischen einem Ein- oder Ausschrauborgan und diesem Verbindungselement (1) herstellen kann, indem er eine Verbindung mit positivem Eingriff mit einem nicht mit Gewinde versehenen Teil des Verbindungselements bildet, bezüglich Drehung selbstblockierende Mittel (26, 41) zwischen der Mutter (2) und dem Aufsatz (4) und Mittel (44) für die elastische Auflage des Aufsatzes (4) auf dem Ende des Verbindungselements (1) besitzt.

2. Adapter nach Anspruch 1, dadurch gekennzeichnet, daß die Mutter (2) axial mit einer durchgehenden Öffnung (20) versehen ist, die im unteren Teil ein Innengewinde (21), das auf das mit Gewinde versehene Ende des Verbindungselements (1) aufgeschraubt werden soll, im mittleren Teil einen Anschlag (22) mit einem Querscnitt in Form eines zur Achse der Öffnung (20) senkrechten Rings und im oberen Teil eine Schutzkappe (23) besitzt, die mit einem zentralen Ausschnitt (24) versehen ist.

3. Adapter nach Anspruch 1, dadurch gekennzeichnet, daß der Doppelanschluß-Aufsatz (4) nacheinander von unten nach oben eine innere Bohrung (40), die an das Ende des Verbindungselements (1) angepaßt ist, einen ringförmigen äußeren Anschlag (43), einen äußeren Zahnkranz (41) und Mittel (42) zum Anschluß an das Ein- oder Ausschrauborgan besitzt.

4. Adapter nach einem der vorhergehenden Ansprüche, dadurch gekennzeichnet, daß die selbstblockierenden Mittel aus wenigstens einer Sperrklinke (26) bestehen, die radial in der Dicke der Wand der Mutter (2) montiert ist und mit dem Zahnkranz (41) des Aufsatzes (4) zusammenwirkt.

5. Adapter nach Anspruch 4, dadurch gekennzeichnet, daß das Ende der Sperrklinke (26) die Form eines Zahns (3) hat, dessen Profil den Zähnen des Kranzes (41) entspricht.

6. Adapter nach Anspruch 1, dadurch gekennzeichnet, daß die Mittel zur elastischen Auflage des Aufsatzes (4) auf dem Ende des Verbindungselements (1) aus einem Federeinsatz (44) bestehen.

7. Adapter nach Anspruch 6, dadurch gekennzeichnet, daß der Federeinsatz (44) aus einem Stapel von konischen Scheiben besteht, die durch eine im Inneren des Aufsatzes (4) aufgehängte Platte (45) gehalten sind.

8. Adapter nach Anspruch 6, dadurch gekennzeichnet, daß der Federeinsatz (44) aus einer Druckfeder besteht, die durch eine im Inneren des Aufsatzes (4) aufgehängte Platte (45) gehalten ist.
